# FASCICULE DE BREVET EUROPEEN

(11) **EP 0 669 185 B1**
(45) Date de publication et mention de la délivrance du brevet: **10.05.2000**
(21) Numéro de dépôt: 94114061.8
(22) Date de dépôt: 08.09.1994
(51) Int. Cl.: B23Q 3/155

(54) **Magasin pour le remplacement d'outils ou de pièces à usiner sur les machines-outils**
Magazin zum Werkzeug- oder Werkstückwechseln bei Werkzeugmaschinen
Magazine for changing tools or workpieces on machine tools

(30) Priorité: 13.09.1993 CH 932750
(43) Date de publication de la demande: 30.08.1995
(73) Titulaire: CHARMILLES TECHNOLOGIES S.A., Zone Ind. de Satigny, Genève (CH)
(72) Inventeur: Girardin, Roger, CH 1214 Vernier (CH)
(74) Mandataire: Micheli & Cie

(56) Documents cités:
- EP-A- 0 406 781
- US-A- 3 881 761
- US-A- 4 008 515

## Description

La présente invention concerne un dispositif pour alimenter une machine-outil CNC ou un centre d'usinage en outils, en pièces ou en autres éléments à transporter, en particulier dans le domaine de l'électroérosion, du fraisage ou de la rectification, principalement dans celui du fraisage par électro-érosion.

Ce dispositif comporte un magasin agencé pour recevoir et stocker les éléments à échanger, que ce soient des outils, éventuellement chargés avec leur porte-outil, ou des pièces palettisèes; ce magasin comporte un changeur pour prélever l'un de ces éléments et le transporter vers une tête d'usinage voisine, ou, inversement pour le ramener de cette tête vers un logement dans le magasin.

Les magasins et changeurs d'outil connus en EDM font en général appel à un magasin linéaire ou en forme de carrousel dans lequel les éléments à échanger sont verrouillés dans leur logement; un bras robot est prévu pour transporter les éléments à échanger, ainsi qu'une commande numérique pour contrôler les déplacements et arrêts en positions de référence du bras, et pour synchroniser les verrouillages et déverrouillages sur ce bras avec ceux réalisés dans la tête d'usinage ou dans le magasin. Le bras se déplace d'abord vers une position précise située sous le magasin de manière que l'élément à transporter soit déverrouillé de son serrage dans le magasin et verrouillé sur le bras, (ou au contraire que l'élément amené de la tête d'usinage soit déverrouillé du bras et verrouillé dans son logement); puis le bras se déplace vers une position de référence en regard de la tête d'usinage (dans le cas d'un outil) ou d'un mandrin de serrage monté sur la table de travail (dans le cas d'une pièce) afin que l'élément à transporter soit déverrouillé de la tête et verrouillé sur le bras, ou inversement que l'élément amené du magasin soit déverrouillé du bras et verrouillé à la tête.

Le déverrouillage ou le verrouillage de l'élément de son serrage dans le magasin et sur le bras peuvent être commandés par la commande numérique de la machine EDM ou par une commande prévue dans le changeur.
Il existe aussi une méthode de contrôler le déverrouillage ou le verrouillage de l'élément sur le bras par des moyens mécaniques comme cela est décrit dans le brevet US-A-4008515. Le mouvement linéaire cause un mouvement des doigts par des guignols a des positions bien définies.

Parfois s'est la tête d'usinage qui joue le rôle de bras robot; parfois ce dernier peut être intégré au bâti de la machine, ainsi que le magasin. Il s'agit la plupart du temps d'un bras pivotant comme par exemple pour les H 808 et H 816 de la société HIRSCHMANN ou le ROBOT 5/50 de la société EROWA. Dans les magasins connus, les éléments à échanger sont verrouillés dans leur logement par des ressorts ou des piliers comme explique dans le US-A-4008515 ou comme montrer dans EP-A-0406781 pour des éléments légèrs et par de forts aimants permanents. L'élément à échanger peut être libéré en position d'échange par un électro-aimant sous l'effet d'un champ contraire à cet aimant permanent.

Or, dans certains types d'usinage, en particulier en fraisage EDM, l'électrode-outil doit être changée souvent, car elle s'use très vite. En effet, dans ce nouveau type d'usinage EDM on usine une cavité ou un relief à trois dimensions en évidant l'électrode-pièce avec une électrode-outil rotative, de forme simple et indépendante du contour souhaité. On peut procéder par couches successives selon les méthodes décrites dans la demande EP 555 818 de la demanderesse. On usine avec un régime à fort taux d'usure, avec un courant d'usinage de très forte densité, en entraînant en rotation à plusieurs milliers de tours/mn de fines électrodes-outil. Les changements d'outil sont donc très fréquents, mais comme les électrodes-outil de fraisage sont de formes standard et comme leur usure est compensée automatiquement, il n'est plus utile de se priver d'aller vite pour économiser de l'électrode. De plus ces régimes ont beaucoup d'autres avantages que le fort enlèvement de matière et ceux cités ci-dessus: meilleur état de surface, meilleure stabilité.

Il restait à régler le problème posé par leur remplacement rapide, et c'est l'origine du développement par la demanderesse du dispositif de la présente invention, celui-ci pouvant toutefois être utilisé très avantageusement dans d'autres applications.

Le but de la présente invention était d'abord de réaliser un magasin avec changeur incorporé permettant de changer l'outil sans avoir à le verrouiller ou le déverrouiller de son logement dans le magasin, donc beaucoup plus rapidement que les magasins avec changeur connus. Un deuxième but était de réaliser un bras robot pour ce changeur, présentant un moyen de serrage actionné plus simplement et beaucoup plus rapidement que ceux des changeurs connus, ne nécessitant en particulier plus de signal électrique ou autre pour se serrer ou se déserrer. D'autres buts étaient de simplifier et d'accélèrer encore les positionnements et déplacement nécessaires en utilisant des mécanismes (motorisés, hydrauliques ou pneumatiques) de serrage sur le magasin ou le bras qui ne soient pas actionnés suite à des signaux émis par la commande numérique de la machine ou du dispositif de la présente invention, ou encore en supprimant le positionnement précis du bras robot en regard du logement du magasin.

L'objet de la présente invention est donc un magasin avec changeur, tel que défini aux revendications 1 à 7.

Les outils (ou autres organes destinés à être monté dans la tête d'usinage , tel un organe de mesure, par example) sont en général chargés dans le magasin avec un monture porte-élément incorporant les moyens de serrage ou verrouillage sur la tête d'usinage. Par la suite, le terme 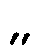 élément" désignera en général l'organe destiné à être monté dans la tête d'usinage et sa monture. La demanderesse a utilisé le fait que les électrodes-outil utilisées en fraisage EDM sont en général très légères par comparaison avec les outils utilisés habituellement en enfoncage ou rectification classique.

Dans le cas de pièces, celles-ci sont petites et chargées avec leur palette.

Une force relativement faible suffit ainsi à maintenir chaque élément (ensemble outil/porte-outil ou autre) dans son logement prévu dans le magasin; cette force peut donc être suffisamment faible pour qu'il puisse être 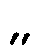 arrache" de cette position par une force exercée en sens contraire par un bras robot en translation; ce bras présente un moyen lui permettant de retenir l'élément lors de sa translation du magasin à la tête d'usinage ou vice-versa. Le maintien de l'élément au fond du logement, et le serrage/déserrage du moyen de retenue sur le bras autour de l'élément, sont actionnés par la propre translation du bras, comme expliqué plus loin en regard du dessin. Ce moyen de maintien dans le logement et ce moyen de retenue sur le bras sont nécessaires dans les variantes où les déplacements du magasin et du bras sont très rapides.

De plus, selon une variante préférée, le bras et son moyen de retenue sont agencés de manière que ce moyen soit dans le même plan horizontal que la position de référence pour le déverrouillage ou le verrouillage de l'élément sur la tête d'usinage; c'est cette dernière qui se déplace verticalement de manière à venir saisir et verrouiller l'élément, ou, inversement à l'amener en position de référence et à le déverrouiller une fois qu'il est serré par le bras.

Contrairement aux bras robot des magasins avec changeur connus, le bras robot de la présente invention n'est donc ni pivotant, ni conformé en L, mais est linéaire. Il est agencé pour ne se déplacer qu'en ligne droite, depuis une position de repos située au dessus du magasin, en retrait des logements pour éléments à transporter, jusqu'à la position de référence sous la tête d'usinage à alimenter; contrairement aux magasins avec changeur connus, il ne doit plus s'arrêter en un point précis de sa trajectoire, en regard du logement de l'élément dans le magasin, pour attendre le déverrouillage de l'élément et le signal lui commandant de le serrer. De plus, il se déplace de préférence toujours dans le même plan horizontal.

On prévoit en général la même position de référence sous la tête d'usinage à alimenter, pour le déverrouillage d'un outil usé ou à changer, et le verrouillage d'un outil neuf; elle sera parfois appelée par la suite " position de verrouillage".

Le bras du changeur n'a qu'un mouvement de va-et-vient à effectuer,
- a) soit pour saisir l'élément à changer encore verrouillé sur la tête, (son mouvement de la position de repos à la position de verrouillage, où il vient buter sur l'élément, actionnant son moyen de retenue) et l'amener, après déverrouillage, au logement prévu sur le magasin où cet élément est arrêté "au vol" par le moyen de maintien présenté par le logement , lui-même continuant jusqu'à sa position de repos,
- b) soit pour "arracher" l'élément neuf au magasin et l'amener "a la volée" sous la tête en position de verrouillage, et, ce dernier étant effectué, pour repartir en sens inverse vers sa position de repos, ce dernier mouvement déserrant son moyen de retenue.

L'originalité du dispositif selon la présente invention est que le bras robot ne marque pas d'arrêt au-dessus du logement dans lequel est placé ou doit être ramené l'élément à transporter.

Le même dispositif peut aussi être utilisé pour remplacer un outil usé, ou pour remplacer un outil par un outil de diamètre différent, ou encore pour remplacer un outil proprement dit par un organe de mesure, par exemple.

Le magasin est mobile de manière à amener tour à tour chacun de ses logements en regard de la tête d'usinage.

La position de référence sous cette tête, dite "position de verrouillage", est établie après montage du magasin de manière à être alignée avec l'axe de symétrie du logement en regard de la tête et avec la position de repos du bras. L'axe de symétrie longitudinal du bras est d'ailleurs confondu avec cette ligne qui joint sa position de repos et la position de verrouillage, ou est située à son aplomb.
Ainsi par exemple, un magasin circulaire et rotatif autour de son centre peut être disposé horizontalement, les logements étant ménagés à sa périphérie avec leurs axes de symétrie confondus avec certains de ses rayons; le bras robot est monté de manière que son axe de symétrie longitudinal soit à l'aplomb de l'un des diamètres du magasin.
Dans d'autres modes de réalisation de la présente invention, un magasin linéaire, mobile le long de son axe longitudinal, peut être disposé horizontalement; les logements sont ménagés le long de sa face en regard de la tête avec leurs axes de symétrie tous parallèles entre eux et orthogonaux à cette face; le bras robot est monté de manière que son axe de symétrie longitudinal soit orthogonal à celui du magasin.
Le magasin peut aussi être disposé verticalement tandis que le bras reste dans un plan horizontal; il est alors mobile dans un plan vertical de manière à amener tour à tour chacun de ses logements dans le plan des translations aller-retour du bras; il est de plus agencé pour positionner chacun de ses logements de façon que leur axe de symétrie soit confondu avec la ligne qui joint la position de repos du bras et la position de verrouillage.

Le moyen maintenant l'élément dans son logement peut être par exemple un organe exerçant une force magnétique permanente. Mais d'autres moyens de type connu ayant la même fonction, permettant de retenir un élément dans un magasin mobile sans résister à la poussée exercée par un bras robot, en ayant par exemple un effet "ventouse", peuvent être utilisés également.
Le moyen retenant l'élément sur le bras coopère en général avec un profil approprié de monture porte-élément; il peut être du type pince à ressort coopérant avec une monture porte-élément à collerettes décrits dans l'exemple, ou de tout autre type connu; il suffit que le serrage de l'élément soit actionnable par la poussée exercée par le bras robot contre l'élément serré dans le magasin ou sur la tête, et son déserrage par le retrait du bras robot.

Selon certaines variantes, l'élément peut être orienté dans son logement grâce à des moyens d'orientation angulaire de type connu, afin d'être montés sur la tête d'usinage selon l'orientation angulaire désirée.

Dans ce qui suit, l'invention est exposée plus en détail à l'aide du dessin représentant seulement l'un des modes d'exécution à titre de simple exemple non limitatif.

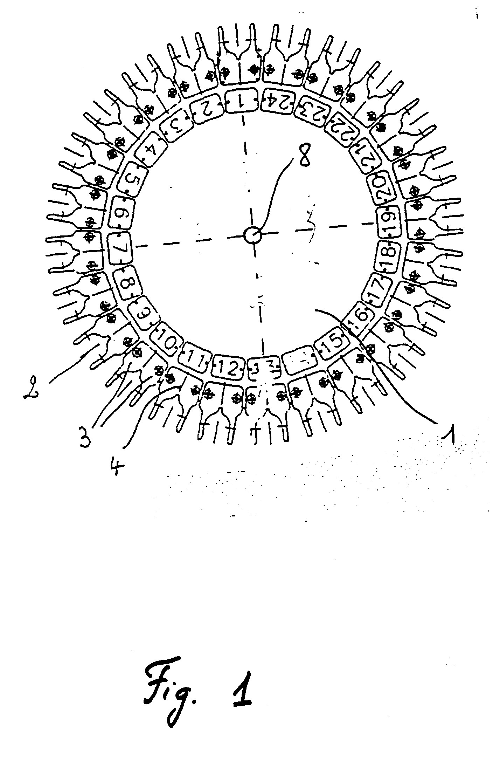

La fig. 1 est une vue aérienne d'un magasin présenté par un dispositif machine selon la présente invention;
les fig. 2a et 2b sont des vues aériennes de l'extrémité du bras robot présentant le moyen de retenue de l'élément en position de repos et de serrage;
la fig. 3 est une coupe transversale de l'extrémité du bras robot et du bord du magasin portant le moyen retenant l'élément au fond du logement alors que le bras vient d'arracher l'élément à transporter à son logement.

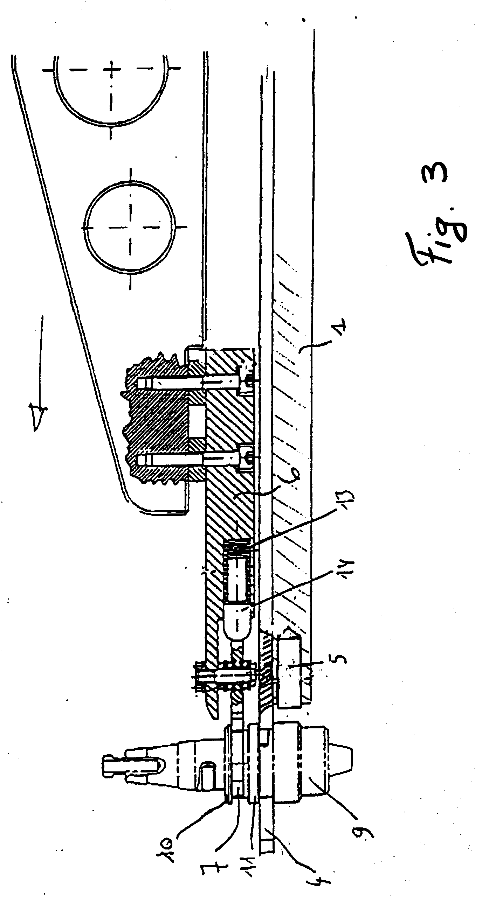

Le magasin 1 est rotatif et circulaire, disposé horizontalement, parallèlement au plan d'usinage. Sa rotation est commandée par la commande numérique de la machine-outil ou du changeur, en fonction de l'élément que l'on désire monter sur la machine-outil ou au contraire démonter de cette dernière. Il présente sur sa circonférence 24 logements 2, agencés chacun pour retenir un élément selon une orientation donnée grâce à un profil en forme de pince 3; l'aimant permanent 5 (visible à la figure 3) correspondant est placé selon l'axe de symétrie 4 de ce profil.

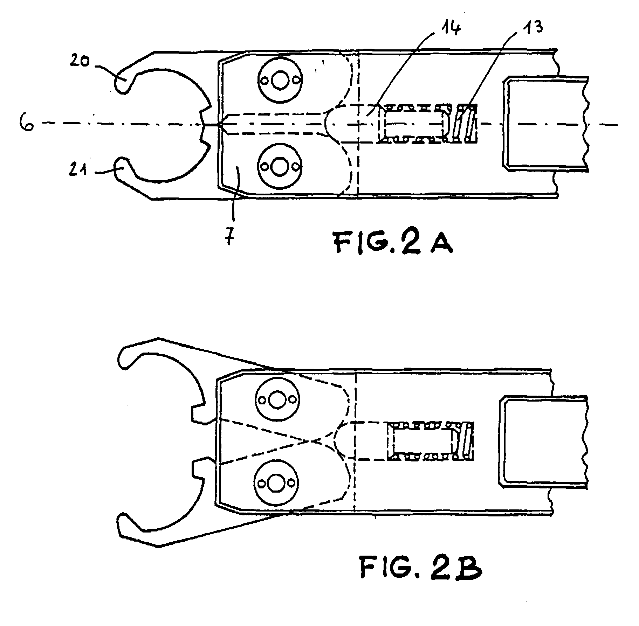

L'axe 6 du bras robot schématisé aux figures 2a et 2b est disposé à l'aplomb du centre 8 du magasin. Ce bras est terminé par une pince 7 disposée elle-aussi parallèlement au plan d'usinage. Son épaisseur est appropriée pour venir s'engager dans un rétrécissement ménagé sur le porte-élément 9 à saisir, entre les collerettes 10 et 11, comme illustré à la figure 3. Cette pince est actionnée mécaniquement par un dispositif à bille 14 et ressort 13, donc sans recours à un signal électronique, comme expliqué aux figures 2a et 2b: l'élément (non représenté au dessin dans un but de simplification) est serré sur la tête ou dans le magasin; le bras en translation vient buter contre lui et exerce une certaine poussée; la faible résistance opposée par l'élément suffit à repousser le ressort 13 dans son logement ce qui permet aux doigts 20 et 21 de la pince 7 de s'écarter (figure 2b) et de prendre l'élément en tenaille; puis, la poussée exercée par le bras n'étant plus absorbée par le ressort et étant supérieure à l'attraction magnétique exercée par l'aimant 5, le bras robot arrache l'élément au magasin (figure 3).

Inversement, lorsque le bras est actionné de manière à s'écarter de l'élément, les doigts 20 et 21 déserrent leur prise autour de l'élément tandis que le ressort 13 se détend et repousse la bille 14, refermant ainsi la pince 7.

On a ainsi réalisé un magasin avec changeur permettant d'alimenter plus rapidement et simplement une machine-outil ou un centre d'usinage, avec des outils ou d'autres organes, tels des organes de mesure, ou des pièces palettisées, à condition qu'ils soient relativement légers. La présente invention est particulièrement utile en électroérosion, surtout fraisage EDM ou percages EDM, en fraisage, en 3D-tracing, en rectification.

## Revendications

1. Dispositif avec magasin (1) et changeur pour alimenter en outils, pièces à usiner ou autres éléments à transporter une machine-outil ou un centre d'usinage, comportant
- un magasin (1) avec des logements (2) pour les éléments à transporter, mobile de manière à amener tour à tour chacun de ses logements èn regard de la tête d'usinage, et - un bras robot linéaire, caractérisé en ce que
- le bras est relié à des moyens pour ne le faire translater que selon un mouvement linéaire de va-et-vient, d'une position de repos à une position de référence fixée sous la tête d'usinage de la machine-outil ou du centre d'usinage, et muni d'un moyen, actionnable par la poussée exercée par le bras contre l'élément serré dans le magasin ou sur la tête, pour retenir l'élément à transporter en le serrant sans le verrouiller, et par le retrait du bras, pour déserrer l'élément à transporter,
- ce magasin est muni d'un moyen pour maintenir sans verrouillage l'élément dans son logement (2), grâce à une force suffisamment faible pour qu'il puisse être "arraché" hors de ce logement par la force exercée en sens contraire par le bras en translation linéaire vers la tête, et à l'inverse, pour le retenir sans verrouillage dans ce logement, lorsque le bras repasse au-dessus de ce logement et l'y dépose "à la volée" lors de son retour vers sa position de repos, et par
- une unité de commande numérique, reliée à la commande numérique de la machine-outil ou du centre d'usinage et destinée à actionner le mouvement du magasin (1) de manière à amener en regard de la tête d'usinage le logement de l'élément qui doit être monté ou démonté de cette tête, et le va-et-vient du bras robot en le synchronisant au verrouillage et déverrouillage de l'élément sur la tête d'usinage.

2. Dispositif selon la revendication 1, dans lequel le magasin (1) est disposé horizontalement avec des logements (2) en profil en forme de pince (3) pour maintenir l'élément (9) dans le magasin dans une position suspendue et dans laquelle chaque logement (2) comporte un aimant permanent(5) placé selon l'axe de symétrie (4) oposé à l'ouverture du logement.

3. Dispositif selon la revendication 1, dans lequel le magasin (1) est circulaire et rotatif, disposé horizontalement avec des logements (2) disposés autour de sa circonférence avec leurs axes de symétrie (4) confondus avec certains de ses rayons, et dans lequel l'axe (6) longitudinal du bras robot est disposé à l'aplomb du centre (8) du magasin.

4. Dispositif selon la revendication 1, dans lequel le magasin (1) et le bras sont agencés de manière que l'axe de symétrie du logement (4) en regard de la tête et l'axe (6) longitudinal du bras robot soient confondus selon une ligne de référence passant par la position de verrouillage fixée sous la tête, cette ligne étant parallèle à la direction de translation du bras.

5. Dispositif selon la revendication 1, dans lequel le serrage de la pince (7) autour de l'élément à transporter (9), est réalisé mécaniquement par un dispositif à bille (14) et un ressort (13), où la repoussée du ressort (13) dans son logement, exercée par le bras en translation lors de la collision contre l'élément, cause un écartement des doigts (20) et (21) de la pince (7) qui permet de prendre l'élément en tenaille.

6. Dispositif selon la revendication 1 et 5, dans lequel le déserrage de l'élément (9) à transporter, est provoqué par le ressort (13) *qui* se détend et repousse la bille (14), laquelle provoque à son tour le déserrage le prise autour de l'élément par les doigts (20) et (21) de la pince (7).

7. Dispositif selon la revendication 1, dans lequel, l'élément étant constitué par un organe et une monture porte-organe incorporant les moyens de serrage ou verrouillage sur la tête d'usinage, le moyen de retenue sur le bras est agencé de manière à coopérer avec un profil approprié ménagé sur le porte-organe.

## Claims

1. Device with a magazine (1) and changer for supplying a machine tool or a machining centre with tools, workpieces or other elements that are to be transported, comprising
- a magazine (1) with housings (2) for the elements that are to be transported, which is able to move so as to bring each of its housings in turn to face the machining head, and
- a linear robot arm,
characterized in that
- the arm is connected to means for causing it to translate only in a reciprocating linear movement from a position of rest into a fixed reference position under the machining head of the machine tool or of the machining centre, and equipped with a means that can actuated with the thrust exerted by the arm against the element clamped in the magazine or on the head in order to retain the element that is to be transported by clamping it without locking it, and by the withdrawal of the arm, so as to unclamp the element that is to be transported,
- this magazine is fitted with a means for keeping the element in its housing (2) without locking, by virtue of a force which is low enough that it can be "snatched" from this housing by the force exerted in the opposite direction by the arm in linear translation towards the head and, conversely, to hold it in this housing without locking when the arm passes back over this housing and it deposits it there "on the fly" as it returns to its position of rest, and by
- a numerical-control unit, connected to the numerical control of the machine tool or of the machining centre and intended to actuate the movement of the magazine (1) so as to bring the housing of the element which is to be mounted on or dismounted from the machining head to face this head, and to actuate the reciprocating movement of the robot arm, synchronizing it with the locking and unlocking of the element on the machining head.

2. Device according to Claim 1, in which the magazine (1) is arranged horizontally with housings (2) which are in the shape of grippers (3) in profile, for holding the element (9) in the magazine in a suspended position in which each housing (2) has a permanent magnet (5) placed along the axis of symmetry (4) at the opposite end of the open side of the housing.

3. Device according to Claim 1, in which the magazine (1) is circular and able to rotate, arranged horizontally with housings (2) arranged around its circumference with their axes of symmetry (4) coincident with some of its radii, and in which the longitudinal axis (6) of the robot arm is arranged vertically in line with the centre (8) of the magazine.

4. Device according to Claim 1, in which the magazine (1) and the arm are arranged in such a way that the axis of symmetry of the housing (4) facing the head and the longitudinal axis (6) of the robot arm are coincident along a reference line that passes through the locking position fixed under the head, this line being parallel to the direction of translation of the arm.

5. Device according to Claim 1, in which the clamping of the gripper (7) around the element (9) that is to be transported is achieved mechanically by a device comprising a ball (14) and a spring (13) in which the thrust of the spring (13) in its housing, exerted by the arm in translation as it collides with the element, causes the fingers (20) and (21) of the gripper (7) to part so that the element can be picked up as if by pincers.

6. Device according to Claim 1 and 5, in which the unclamping of the element (9) that is to be transported is brought about by the spring (13) which relaxes and pushes back the ball (14), which in turn releases the clamping grip around the element by the fingers (20) and (21) of the gripper (7).

7. Device according to Claim 1 in which, with the element consisting of a member and of a member-holder fixture incorporating the means of clamping or locking on the machining head, the retaining means on the arm is designed to cooperate with an appropriate profile formed on the member holder.

## Patentansprüche

1. Vorrichtung mit Magazin (1) und Wechseleinrichtung zum Versorgen einer Werkzeugmaschine oder eines Bearbeitungszentrums mit Werkzeugen, zu bearbeitenden Werkstücken oder anderen zu befördernden Elementen, mit
- einem Magazin (1) mit Aufnahmen (2) für die zu befördernden Elemente, das auf eine Weise beweglich ist, daß es jede seiner Aufnahmen nacheinander gegenüber dem Bearbeitungskopf bringen kann, und
- einem linearen Roboterarm
gekennzeichnet,
dadurch, daß der Arm mit Mitteln verbunden ist, um ihn nur gemäß einer hin- und hergehenden, translatorischen Linearbewegung aus einer Ruhestellung in eine teste Bezugsstellung unter dem Bearbeitungskopf der Werkzeugmaschine oder des Bearbeitungszentrums zu bewegen, und mit einem Mittel versehen ist, das durch die durch den Arm ausgeübte Schubwirkung gegen das in das Magazin oder an den Kopf geklemmte Element dahingehend betätigbar ist, das zu befördernde Element festzuhalten, indem es es einklemmt, ohne es zu verriegeln, und das durch das Zurückziehen des Arms dahingehend betätigbar ist, das zu befördernde Element freizugeben,
dadurch, daß dieses Magazin mit einem Mittel versehen ist, um das Element in seiner Aufnahme (2) ohne Verriegelung durch eine Kraft zu halten, die gering genug ist, daß es durch die in entgegengesetzter Richtung durch den translatorisch in Linearrichtung bewegten Arm in Richtung des Kopfes ausgeübte Kraft aus seiner Aufnahme "herausgerissen" werden kann, und umgekehrt, in dieser Aufnahme ohne Verriegelung festzuhalten, wenn der Arm wieder über dieser Aufnahme vorbeigeführt wird und es dort bei seinem Rückweg zur Ruhestellung "im Fluge" ablegt, und durch eine numerische Steuereinheit, die mit der numerischen Steuereinheit der Werkzeugmaschine oder des Bearbeitungszentrums verbunden und dazu bestimmt ist, die Bewegung des Magazins (1) so anzusteuern, daß die Aufnahme des Elements, das montiert oder von dem Bearbeitungskopf abmontiert werden soll, gegenüber diesem Kopf geführt wird, und die Hin- und Herbewegung des Roboterarms so anzusteuern, daß sie mit der Verriegelung und Entriegelung des Elements an dem Bearbeitungskopf synchronisiert wird.

2. Vorrichtung nach Anspruch 1, bei der das Magazin (1) waagerecht mit den ein zangenförmiges Profil (3) aufweisenden Aufnahmen (2) angeordnet ist, um das Element (9) in einer hängenden Position in dem Magazin zu halten, und bei der jede Aufnahme (2) einen Dauermagnet (5) aufweist, der entlang der Symmetrieachse (4) gegenüber der Öffnung der Aufnahme angeordnet ist.

3. Vorrichtung nach Anspruch 1, bei der das Magazin (1) kreisrund und drehbar ist und waagerecht mit Aufnahmen (2) angeordnet ist, die um seinen Umfang angeordnet sind, wobei ihre Symmetrieachsen (4) mit bestimmten ihrer Radien zusammenfallen, und bei der die Längsachse (6) des Roboterarms senkrecht zur Mitte (8) des Magazins angeordnet ist.

4. Vorrichtung nach Anspruch 1, bei der das Magazin (1) und der Arm so angeordnet sind, daß die Symmetrieachse der Aufnahme (4) gegenüber dem Kopf und die Längsachse (6) des Roboterarms entlang einer Bezugslinie, die durch die feste Verriegelungsstellung unter dem Kopf verläuft, zusammenfallen, wobei diese Linie parallel zur Translationsbewegungsrichtung des Arms verläuft.

5. Vorrichtung nach Anspruch 1, bei der das Einklemmen des zu befördernden Elements (9) durch die Zange (7) mechanisch durch eine eine Kugel (14) aufweisende Vorrichtung und eine Feder (13) erfolgt, wo das Zurückschieben der Feder (13) in ihre Aufnahme, was durch die Translationsbewegung des Arms bei der Kollision mit dem Element verursacht wird, ein Spreizen der Finger (20) und (21) der Zange (7) bewirkt, wodurch das Element in Eingriff genommen werden kann.

6. Vorrichtung nach Anspruch 1 und 5, bei der das Freigeben des zu befördernden Elements (9) durch die Feder (13) bewirkt wird, die sich entspannt und die Kugel (14) zurückschiebt, welche wiederum das Lösen des Griffs um das Element durch die Finger (20) und (21) der Zange (7) bewirkt.

7. Vorrichtung nach Anspruch 1, bei der das Element von einem Glied und einem das Glied tragenden Halter mit Mitteln zum Einklemmen oder Verriegeln am Bearbeitungskopf gebildet wird, wobei das Mittel zum Halten am Arm so angeordnet ist, daß es mit einem geeigneten, an das Glied tragenden Halter ausgebildeten Profil zusammenwirkt.
